# EUROPÄISCHE PATENTSCHRIFT

(11) **EP 3 172 077 B1**
(45) Veröffentlichungstag und Bekanntmachung des Hinweises auf die Patenterteilung: **16.11.2022**
(21) Anmeldenummer: 15732242.1
(22) Anmeldetag: 26.06.2015
(51) Int. Cl.: B60L 3/00, B60L 58/24, B60L 3/04, B60L 3/06, H04W 4/021

(54) **VERFAHREN ZUM BETREIBEN EINES ASSISTENZSYSTEMS EINES FAHRZEUGS MIT MINDESTENS EINEM ELEKTRISCHEN ENERGIESPEICHER**
METHOD FOR OPERATING AN ASSISTANCE SYSTEM OF A VEHICLE WITH AT LEAST ONE ELECTRICAL ENERGY STORE
PROCÉDÉ PERMETTANT DE FAIRE FONCTIONNER UN SYSTÈME D'ASSISTANCE D'UN VÉHICULE COMPRENANT AU MOINS UN ACCUMULATEUR D'ÉNERGIE ÉLECTRIQUE

(30) Priorität: 24.07.2014 DE 102014214594
(43) Veröffentlichungstag der Anmeldung: 31.05.2017
(73) Patentinhaber: Robert Bosch GmbH, 70442 Stuttgart (DE)
(72) Erfinder: KRIEG, Berengar, 70839 Gerlingen (DE)
(86) Internationale Anmeldenummer: PCT/EP2015/064591
(87) Internationale Veröffentlichungsnummer: WO 2016/012197

(56) Entgegenhaltungen:
- EP-A1- 2 708 457
- EP-A2- 2 757 654
- DE-A1-102011 115 908
- DE-A1-102012 207 152
- US-A1- 2012 001 746

## Beschreibung

### Stand der Technik

Die Erfindung geht aus von einem Verfahren zum Betreiben eines Assistenzsystems eines Fahrzeugs mit mindestens einem elektrischen Energiespeicher.

Aus dem Stand der Technik sind Verfahren für Assistenzsysteme von Fahrzeugen bekannt, die im Falle eines Notfalls einen Notruf auslösen und eine Position des Fahrzeugs übermitteln.

So offenbart die DE102012207152 ein Verfahren und Vorrichtung zum Auslösen zumindest einer Sicherheitsfunktion bei Vorliegen eines sicherheitskritischen Zustands eines elektrochemischen Energiespeichers und elektrochemisches Energiespeichersystem.

Die US2013/0260192 offenbart ein System zum Erfassen eines thermischen Ereignisses innerhalb abgedichteter Batteriepacks basierend auf einer überwachten Druckänderung innerhalb des Batteriepacks.

Die DE102011078444 offenbart eine Ladungssteuerungsvorrichtung mit einer Hauptsteuereinheit und einer Energiequellensteuereinheit, sowie ein Notfallunterrichtungssystem.

### Offenbarung der Erfindung

Nachteilig an dem bekannten Stand der Technik ist, dass ein Notfall des Fahrzeugs mittels Sensoren erkannt wird und ein Notruf ausgelöst wird und die Position des Fahrzeugs an eine Notrufzentrale übermittelt wird, aber keine Auswertung der Position des Fahrzeugs durchgeführt wird, um beispielsweise Maßnahmen vor einem Notfall einzuleiten.

### Vorteile der Erfindung

Die erfindungsgemäße Vorgehensweise mit den kennzeichnenden Merkmalen der unabhängigen Ansprüche weist demgegenüber den Vorteil auf, dass zum Betreiben eines Assistenzsystems eines Fahrzeugs mit mindestens einem elektrischen Energiespeicher eine Temperatur des elektrischen Energiespeichers des Fahrzeugs mittels mindestens eines ersten Sensors erfasst wird, ein Betriebszustand des elektrischen Energiespeichers mittels der erfassten Temperatur des elektrischen Energiespeichers durch ein Steuergerät erkannt wird, eine Position des Fahrzeugs bestimmt wird und/oder ein Betriebsparameter des Fahrzeugs insbesondere mittels mindestens eines zweiten Sensors erfasst wird, und der Betriebszustand an das Assistenzsystem des Fahrzeugs übermittelt wird und mindestens ein Signal durch das Assistenzsystem im Fall eines abnormen Betriebszustands des elektrischen Energiespeichers erzeugt wird, wenn die Position des Fahrzeugs innerhalb eines vorgebbaren geografischen Bereichs liegt. Weitere vorteilhafte Ausführungsformen der vorliegenden Erfindung sind Gegenstand der Unteransprüche.

Der Bereich der sicherheitskritischen Umgebungen umfasst beispielsweise Tunnel, Tiefgaragen, Tankstellen und/oder Chemieanlagen.

In einer weiteren vorteilhaften Ausführungsform umfasst der Bereich mehrere Teilbereiche, so dass beispielsweise unterschiedliche Maßnahmen in Abhängigkeit einer Distanz zu einem Objekt innerhalb der sicherheitskritischen Umgebung ergriffen werden.

Vorteilhafterweise wird neben einer Positionsbestimmung des Fahrzeugs auch eine Fahrtrichtung und eine Momentangeschwindigkeit des Fahrzeugs erfasst, so dass beispielsweise im Falle eines Fehlers des zweiten Sensors aus der letzten Position, der Fahrtrichtung und/oder der Momentangeschwindigkeit eine angenomme Position des Fahrzeugs ermittelt wird.

Vorteilhafterweise löst das Signal einen Momenteneingriff zur Reduzierung einer Geschwindigkeit des Fahrzeugs aus, wodurch die Geschwindigkeit des Fahrzeugs reduziert wird.

Das Signal löst ein Abbremsen des Fahrzeugs mittels eines Bremseingriffs, aus, wodurch ein Fahrer des Fahrzeugs auf den abnormen Betriebszustand des elektrischen Energiespeichers aufmerksam gemacht wird oder eine Notbremsung unter Beachtung von fahrdynamischen Stabilitätsgrenzen des Fahrzeugs durchgeführt wird. Der Bremseingriff wird beispielsweise durch ein Stau- oder Auffahr-Assistenzsystem des Fahrzeugs durchgeführt, welches das Signal empfängt.

Durch das Abbremsen des Fahrzeugs mittels eines Momenteneingriffs und/oder einer Notbremsung wird im Fall eines abnormen Betriebszustands verhindert, dass das Fahrzeug in eine der sicherheitskritischen Umgebungen einfährt und/oder innerhalb der sicherheitskritischen Umgebungen weiterfährt, beispielsweise wird das Fahrzeug bei einer erkannten Überhitzung des elektrischen Energiespeichers an einer Einfahrt in einen Tunnel oder eine Tankstelle durch ein rechtzeitiges Anhalten des Fahrzeugs gehindert, wodurch ein möglicher Brand des elektrischen Energiespeichers in dem Tunnel verhindert wird.

Vorteilhafterweise löst das Signal ein Abtrennen des elektrischen Energiespeichers von einem Antriebsstrang des Fahrzeugs aus, wodurch beispielsweise ein Ladevorgang durch Rekuperation sicher verhindert wird. Vorteilhafterweise löst das Signal einen Notlauf des Fahrzeugs mit einer reduzierten Antriebsleistung aus, beispielsweise fährt das Fahrzeug nur noch mit einer ausschließlich durch einen Range-Extender zur Verfügung gestellten Leistung, so dass eine Belastung des elektrischen Energiespeichers verhindert wird.

Vorteilhafterweise löst das Signal ein Einschalten einer Warnblinkanlage des Fahrzeugs aus, wodurch andere Verkehrsteilnehmer auf eine mögliche Gefahrensituation des Fahrzeugs aufmerksam gemacht werden.

Vorteilhafterweise löst das Signal einen Notruf an eine Notrufzentrale aus, wodurch Rettungskräfte frühzeitig alarmiert werden und geeignete Gegenmaßnahmen durch rechtzeitiges Eintreffen der Rettungskräfte eingeleitet werden.

Vorteilhafterweise löst das Signal eine optische, akustische und/oder haptische Warnung an einen Fahrer des Fahrzeugs aus, wodurch dieser auf den abnormen Betriebszustand aufmerksam gemacht wird und eigenständig Maßnahmen ergreifen kann oder bereits eingeleitete Maßnahmen ändern und/oder abbrechen kann.

Ein Anwendungsfall für das Ändern und/oderAbbrechen einer eingeleiteten Maßnahme tritt beispielsweise dann auf, wenn das erneute Starten des Antriebsstrangs des Fahrzeugs aufgrund eines abnormen Betriebszustands des elektrischen Energiespeichers durch das Signal verhindert wird, die Position des Fahrzeugs aber innerhalb eines ersten sicherheitskritischen Bereich liegt, beispielsweise wenn eine Überhitzung des elektrischen Energiespeichers während eines Ladevorgangs an einer Tankstelle erkannt wird. Durch das Abbrechen der Maßnahme und ein erneutes Starten des Antriebsstrangs wird dem Fahrer des Fahrzeugs ermöglicht, das Fahrzeugs aus dem sicherheitskritischen Bereich zu fahren, wobei aber gleichzeitig durch das erfindungsgemäße Verfahren bei einem Übergang von dem ersten sicherheitskritischen Bereich in einen zweiten sicherheitskritischen Bereich, beispielsweise ein in kurzer Distanz nach der Tankstelle folgender Tunnel, ein Signal erzeugt wird, wodurch beispielsweise ein Momenteneingriff erfolgt.

Vorteilhafterweise verhindert das Signal ein erneutes Starten des Antriebssystems des Fahrzeugs, solange der elektrische Energiespeichers in einen abnormen Betriebszustand ist und/oder die Position des Fahrzeugs innerhalb des vorgebbaren geografischen Bereichs liegt, wodurch eine versehentliche Inbetriebnahme, beispielsweise durch einen Wechsel des Fahrer, verhindert wird.

Die geografischen Bereiche werden beispielsweise durch eine Erweiterung von Navigationskarten um Informationen über sicherheitskritische Bereiche für Fahrzeuge mit mindestens einem elektrischen Energiespeicher vorgegeben, beispielsweise durch Überlagerungskarten zu den vorhandenen Navigationskarten und/oder durch eine Definition der sicherheitskritischen Bereiche anhand von geografischen Koordinaten.

Vorteilhafterweise erfolgt die Übermittlung der Temperatur, des Betriebszustands und/oder des Signals drahtgebunden, beispielsweise mittels eines CAN-Bus, Flexray-, Most- und/oder Lin-Bus, und/oder drahtlos, beispielsweise mittels Bluetooth, UMTS, LTE und/oder WLAN.

Die Positionsbestimmung des Fahrzeugs erfolgt vorteilhafterweise mittels eines satellitengestützten und/oder funknetzgestützten Verfahrens mittels eine Steuergeräts des Fahrzeugs, eines Navigationssystems des Fahrzeugs und/oder mittels eines Smartphone des Fahrers.

Das Assistenzsystem umfasst mindestens ein Steuergerät zur Durchführung des erfindungsgemäßen Verfahrens, wobei vorteilhafterweise ein erster Sensor eine Temperatur eines elektrischen Energiespeichers eines Fahrzeugs und ein zweiter Sensor eine Position und/oder einen Betriebsparameter des Fahrzeugs erfasst.

Vorteilhafterweise umfasst der Betriebsparameter die Geschwindigkeit des Fahrzeugs, eine Raddrehzahl, eine Momentenanforderung durch den Fahrer des Fahrzeugs, einen Lade- oder Entladestrom des elektrischen Energiespeichers, eine Außentemperatur, einen Lenkwinkel und/oder eine Querbeschleunigung des Fahrzeugs.

Vorteilhafterweise wird das erfindungsgemäße Verfahren in einem Fahrzeug mit mindestens einer Lithium-Ionen-Batterie, einer Lithium-Schwefel-Batterie und/oder einer Lithium-Luft-Batterie verwendet.

### Kurzbeschreibung der Figuren

Ausführungsbeispiele der Erfindung sind in der Zeichnung dargestellt und in der nachfolgenden Beschreibung näher erläutert.

Es zeigt:
Figur 1 ein Flussdiagramm einer Ausführungsform des erfindungsgemäßen Verfahrens; und
Figur 2 eine Ausführungsform des erfindungsgemäßen Assistenzsystems.

### Detaillierte Beschreibung der Ausführungsbeispiele

Gleiche Bezugszeichen bezeichnen in allen Figuren gleiche Vorrichtungskomponenten.

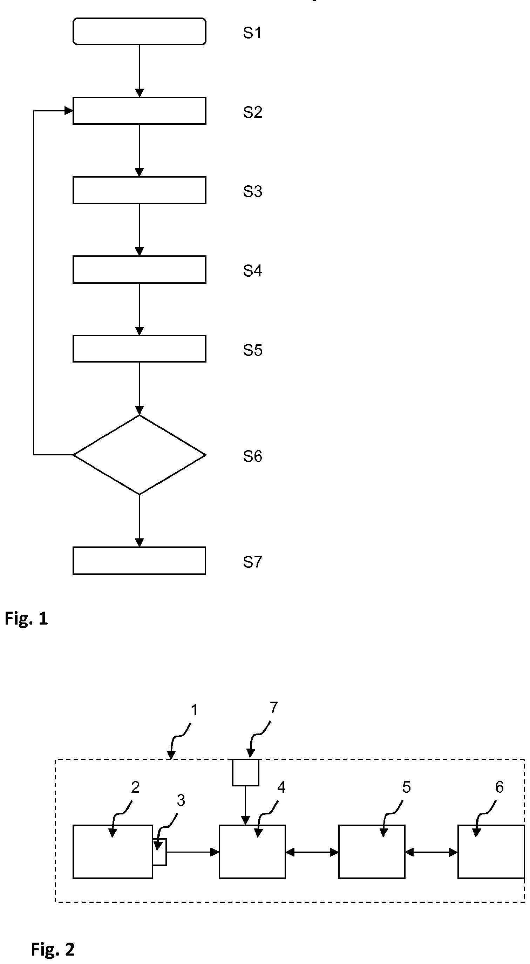

Figur 1 zeigt ein Flussdiagramm einer Ausführungsform des erfindungsgemäßen Verfahrens zum Betreiben eines Assistenzsystems eines Fahrzeugs mit mindestens einem elektrischen Energiespeicher. In schritt S1 wird das Verfahren gestartet, beispielsweise wenn das Fahrzeug startet.

In Schritt S2 wird eine Temperatur des elektrischen Energiespeichers des Fahrzeugs mittels mindestens eines Sensors erfasst, beispielsweise mittels eines Temperatursensors. Die erfasste Temperatur wird drahtgebunden und/oder drahtlos an ein Steuergerät übermittelt, beispielsweise an ein Steuergerät des Fahrzeugs und/oder an ein Smartphone.

Vorteilhafterweise werden erfasste Temperaturen durch den Sensor oder das Steuergerät entprellt, um eine Anzahl von möglichen Fehlalarmen zu reduzieren.

In Schritt S3 wird ein Betriebszustand des elektrischen Energiespeichers mittels der erfassten Temperatur des elektrischen Energiespeichers durch das Steuergerät erkannt, beispielsweise wenn ein Ladevorgang bzw. Entladevorgang des elektrischen Energiespeichers durchgeführt wird, der elektrische Energiespeichers in einem normalen Betriebszustand betrieben wird, oder der elektrische Energiespeicher sich in einem abnormen, kritischen Betriebszustand befindet.

Ein abnormer Betriebszustand liegt beispielsweise vor, wenn die Temperatur des elektrischen Energiespeichers einen definierten Schwellenwert von 200°C überschreitet und dadurch mit hoher Wahrscheinlichkeit ein Brand des elektrischen Energiespeichers verursacht wird.

In Schritt S4 wird eine Position des Fahrzeugs mittels eines satellitengestützten und/oder funknetzgestützten Verfahrens mittels eine Steuergeräts des Fahrzeugs, eines Navigationssystems des Fahrzeugs und/oder mittels eines Smartphone des Fahrers bestimmt.

In einer weiteren Ausführungsform wird mindestens ein Betriebsparameter des Fahrzeugs erfasst, beispielsweise eine Geschwindigkeit des Fahrzeugs.

In Schritt S5 wird der erkannte Betriebszustand an das Assistenzsystem drahtgebunden, beispielsweise eine Nachricht mittels eines CAN-Bus des Fahrzeugs, und/oder drahtlos, beispielsweise eine verschlüsselte Nachricht mittels Kurzstreckenfunk, übermittelt.

In Schritt S6 wird durch das Assistenzsystems geprüft, ob der elektrische Energiespeicher einen abnormen Betriebszustand aufweist und die Position des Fahrzeugs innerhalb eines vorgebbaren geografischen Bereichs liegt und in Schritt S6 ein Signal erzeugt. Wenn der elektrische Energiespeicher keinen abnormen Betriebszustand aufweist und/oder die Position außerhalb einer vorgebbaren geografischen Bereichs liegt, wird das Verfahren in Schritt S2 fortgeführt.

Das Verfahren wird in Schritt 7 beendet, sobald das Fahrzeug abgestellt wird, nach dem Abstellen des Fahrzeugs ein Ladevorgang an einer Ladesäule abgeschlossen ist und/oder nach einer vordefinierten Zeitspanne.

In einer alternativen Ausführungsform wird das Verfahren fortlaufend zyklisch wiederholt, wenn die Position des abgestellten Fahrzeug innerhalb des vorgebbaren geografischen Bereichs liegt, so dass auch bei einem abgestellten Fahrzeug ein Notruf ausgelöst wird, sobald ein abnormer Betriebszustand vorliegt, beispielsweise durch eine Überhitzung des elektrischen Energiespeichers während eines Ladevorgangs.

Figur 2 zeigt ein Assistenzsystem 1 eines Fahrzeugs mit mindestens einem elektrischen Energiespeicher 2. Ein Sensor 3 erfasst eine Temperatur des elektrischen Energiespeichers 2 und übermittelt diese drahtgebunden und/oder drahtlosan ein Steuergerät, beispielsweise ein Steuergerät des Fahrzeugs und/oder ein Smartphone. Das Steuergerät 4 erkennt einen Betriebszustand des elektrischen Energiespeichers 2 und übermittelt diesen an das Assistenzsystem 5 des Fahrzeugs. Das Assistenzsystem 5 erzeugt ein Signal, beispielsweise sendet das Assistenzsystem eine elektronische Nachricht an ein Notbremssystem 6 des Fahrzeugs, wenn eine durch einen Sensor 7 erfasst Position des Fahrzeugs innerhalb eines vorgebbaren geografischen Bereichs liegt.

In einer weiteren Ausführungsform wird ein optischer, akustischer und/oder haptischer Hinweis an einen Fahrer des Fahrzeugs durch das Signal ausgelöst, so dass dieser geeignete Maßnahmen ergreifen kann.

## Patentansprüche

1. Verfahren zum Betreiben eines Assistenzsystems (1) eines Fahrzeugs mit mindestens einem elektrischen Energiespeicher (2), folgende Schritte umfassend:
- erfassen (S2) einer Temperatur des elektrischen Energiespeichers (2) des Fahrzeugs mittels mindestens eines ersten Sensors (3),
- erkennen (S3) eines Betriebszustands des elektrischen Energiespeichers (2) mittels der erfassten Temperatur des elektrischen Energiespeichers (2) durch ein Steuergerät (4),
- Positionsbestimmung (S4) des Fahrzeugs und/oder erfassen eines Betriebsparameters des Fahrzeugs insbesondere mittels mindestens eines zweiten Sensors (7),
- übermitteln (S5) des Betriebszustands an das Assistenzsystem (1) des Fahrzeugs,
wobei mindestens (S6) ein Signal durch das Assistenzsystem (1) im Fall eines abnormen Betriebszustands des elektrischen Energiespeichers (2) erzeugt wird, wenn die Position des Fahrzeugs innerhalb eines vorgebbaren geografischen Bereichs liegt,
**dadurch gekennzeichnet, dass**
der vorgegebene geografische Bereich sicherheitskritische Umgebungen umfasst und wobei dass das Signal ein Abbremsen des Fahrzeugs mittels eines Bremseingriffs auslöst, so dass verhindert wird, dass das Fahrzeug in eine sicherheitskritische Umgebung einfährt und/oder innerhalb der sicherheitskritischen Umgebung weiterfährt.

2. Verfahren nach Anspruch 1, **dadurch gekennzeichnet, dass** das Signal einen Momenteneingriff zur Reduzierung einer Geschwindigkeit des Fahrzeugs auslöst.

3. Verfahren nach einem der vorhergehenden Ansprüche, **dadurch gekennzeichnet, dass** das Signal ein Abtrennen des elektrischen Energiespeichers (2) von einem Antriebsstrang des Fahrzeugs auslöst.

4. Verfahren nach einem der vorhergehenden Ansprüche, **dadurch gekennzeichnet, dass** das Signal einen Notlauf des Fahrzeugs mit einer reduzierten Antriebsleistung auslöst.

5. Verfahren nach einem der vorhergehenden Ansprüche, **dadurch gekennzeichnet, dass** das Signal ein Einschalten einer Warnblinkanlage des Fahrzeugs auslöst.

6. Verfahren nach einem der vorhergehenden Ansprüche, **dadurch gekennzeichnet, dass** das Signal einen Notruf an eine Notrufzentrale auslöst.

7. Verfahren nach einem der vorhergehenden Ansprüche, **dadurch gekennzeichnet, dass** das Signal eine optische, akustische und/oder haptische Warnung an einen Fahrer des Fahrzeugs auslöst.

8. Verfahren nach einem der vorhergehenden Ansprüche, **dadurch gekennzeichnet, dass** das Signal ein erneutes Starten des Antriebssystems des Fahrzeugs verhindert, solange der elektrische Energiespeichers (2) in einen abnormen Betriebszustand ist und/oder die Position des Fahrzeugs innerhalb des vorgebbaren geografischen Bereichs liegt.

9. Verfahren nach einem der vorhergehenden Ansprüche, **dadurch gekennzeichnet, dass** das Signal drahtgebunden und/oder drahtlos übermittelt wird.

10. Verfahren nach einem der vorhergehenden Ansprüche, **dadurch gekennzeichnet, dass** die Positionsbestimmung des Fahrzeugs mittels eines satellitengestützten und/oder funknetzgestützten Verfahrens mittels eine Steuergeräts (4) des Fahrzeugs, eines Navigationssystems des Fahrzeugs und/oder mittels eines Smartphone des Fahrers erfolgt.

11. Verfahren nach einem der vorhergehenden Ansprüche, **dadurch gekennzeichnet, dass** der Betriebsparameter die Geschwindigkeit des Fahrzeugs, eine Raddrehzahl, eine Momentenanforderung durch den Fahrer des Fahrzeugs, einen Lade- oder Entladestrom des elektrischen Energiespeichers (2), eine Außentemperatur, einen Lenkwinkel und/oder eine Querbeschleunigung des Fahrzeugs umfasst.

12. Assistenzsystem (1) mit mindestens einem Steuergerät (4) zur Durchführung eines Verfahrens nach einem der Ansprüche 1 bis 11, **dadurch gekennzeichnet, dass** mindestens ein erster Sensor (3) eine Temperatur eines elektrischen Energiespeichers (2) des Fahrzeugs erfasst und mindestens ein zweiter Sensor (7) eine Position und/oder einen Betriebsparameter des Fahrzeugs erfasst.

13. Verwendung eines Verfahrens nach einem der Ansprüche 1 bis 11 in einem Fahrzeug mit mindestens einer Lithium-Ionen-Batterie, Lithium-Schwefel-Batterie und/oder Lithium-Luft-Batterie.

## Claims

1. Method for operating an assistance system (1) of a vehicle having at least one electrical energy store (2), comprising the following steps:
- detecting (S2) a temperature of the electrical energy store (2) of the vehicle by means of at least one first sensor (3),
- identifying (S3) an operating state of the electrical energy store (2) by means of the detected temperature of the electrical energy store (2) by way of a control device (4),
- determining (S4) the position of the vehicle and/or detecting an operating parameter of the vehicle, in particular by means of at least one second sensor (7),
- transmitting (S5) the operating state to the assistance system (1) of the vehicle,
wherein, in the event of an abnormal operating state of the electrical energy store (2), at least (S6) one signal is generated by way of the assistance system (1) if the position of the vehicle lies within a predefinable geographical area,
**characterized in that**
the predefined geographical area comprises safety-critical environments, and wherein **in that** the signal initiates braking of the vehicle by means of a braking intervention, so that the vehicle is prevented from driving into a safety-critical environment and/or from continuing to drive within the safety-critical environment.

2. Method according to Claim 1, **characterized in that** the signal initiates a torque intervention in order to reduce a speed of the vehicle.

3. Method according to one of the preceding claims, **characterized in that** the signal initiates disconnection of the electrical energy store (2) from a drive train of the vehicle.

4. Method according to one of the preceding claims, **characterized in that** the signal initiates emergency running of the vehicle at a reduced drive power.

5. Method according to one of the preceding claims, **characterized in that** the signal initiates switching-on of the hazard warning lights of the vehicle.

6. Method according to one of the preceding claims, **characterized in that** the signal initiates an emergency call to an emergency call centre.

7. Method according to one of the preceding claims, **characterized in that** the signal initiates an optical, acoustic and/or haptic warning to a driver of the vehicle.

8. Method according to one of the preceding claims, **characterized in that** the signal prevents the drive system of the vehicle from restarting so long as the electrical energy store (2) is in an abnormal operating state and/or the position of the vehicle lies within the predefinable geographical area.

9. Method according to one of the preceding claims, **characterized in that** the signal is transmitted in wired and/or wireless fashion.

10. Method according to one of the preceding claims, **characterized in that** the position of the vehicle is determined by means of a satellite-based and/or radio network-based method by means of a control device (4) of the vehicle, a navigation system of the vehicle and/or by means of a smartphone of the driver.

11. Method according to one of the preceding claims, **characterized in that** the operating parameter comprises the speed of the vehicle, a wheel speed, a torque request made by the driver of the vehicle, a charge or discharge current of the electrical energy store (2), an external temperature, a steering angle and/or a lateral acceleration of the vehicle.

12. Assistance system (1) having at least one control device (4) for carrying out a method according to one of Claims 1 to 11, **characterized in that** at least one first sensor (3) detects a temperature of an electrical energy store (2) of the vehicle and at least one second sensor (7) detects a position and/or an operating parameter of the vehicle.

13. Use of a method according to one of Claims 1 to 11 in a vehicle having at least one lithium-ion battery, lithium-sulphur battery and/or lithium-air battery.

## Revendications

1. Procédé permettant de faire fonctionner un système d'assistance (1) d'un véhicule doté d'au moins un accumulateur d'énergie électrique (2), comprenant les étapes suivantes consistant à :
- détecter (S2) une température de l'accumulateur d'énergie électrique (2) du véhicule au moyen d'au moins un premier capteur (3),
- identifier (S3) un état de fonctionnement de l'accumulateur d'énergie électrique (2) au moyen de la température détectée de l'accumulateur d'énergie électrique (2) par un appareil de commande (4),
- déterminer la position (S4) du véhicule et/ou détecter un paramètre de fonctionnement du véhicule en particulier au moyen d'au moins un deuxième capteur (7),
- transmettre (S5) l'état de fonctionnement au système d'assistance (1) du véhicule,
dans lequel au moins (S6) un signal est généré par le système d'assistance (1) dans le cas d'un état de fonctionnement anormal de l'accumulateur d'énergie électrique (2) si la position du véhicule se trouve à l'intérieur d'une zone géographique prédéfinissable,
**caractérisé en ce que** la zone géographique prédéfinie comprend des environnements sensibles en termes de sécurité, et dans lequel **en ce que** le signal déclenche une décélération du véhicule au moyen d'une intervention de freinage de façon à empêcher le véhicule d'entrer dans un environnement sensible en termes de sécurité et/ou de continuer à se déplacer à l'intérieur de l'environnement sensible en termes de sécurité.

2. Procédé selon la revendication 1, **caractérisé en ce que** le signal déclenche une intervention au niveau du couple afin de réduire la vitesse du véhicule.

3. Procédé selon l'une quelconque des revendications précédentes, **caractérisé en ce que** le signal déclenche une déconnexion de l'accumulateur d'énergie électrique (2) d'une chaîne cinématique du véhicule.

4. Procédé selon l'une quelconque des revendications précédentes, **caractérisé en ce que** le signal déclenche un fonctionnement de secours du véhicule avec une puissance d'entraînement réduite.

5. Procédé selon l'une quelconque des revendications précédentes, **caractérisé en ce que** le signal déclenche une mise en marche des feux de détresse du véhicule.

6. Procédé selon l'une quelconque des revendications précédentes, **caractérisé en ce que** le signal déclenche un appel d'urgence destiné à un centre d'appel d'urgence.

7. Procédé selon l'une quelconque des revendications précédentes, **caractérisé en ce que** le signal déclenche un avertissement optique, acoustique et/ou haptique à l'intention d'un conducteur du véhicule.

8. Procédé selon l'une quelconque des revendications précédentes, **caractérisé en ce que** le signal empêche un redémarrage du système d'entraînement du véhicule tant que l'accumulateur d'énergie électrique (2) est dans un état de fonctionnement anormal et/ou la position du véhicule se trouve à l'intérieur de la zone géographique prédéfinissable.

9. Procédé selon l'une quelconque des revendications précédentes, **caractérisé en ce que** le signal est transmis par fil et/ou sans fil.

10. Procédé selon l'une quelconque des revendications précédentes, **caractérisé en ce que** la détermination de position du véhicule est effectuée au moyen d'un procédé assisté par satellite et/ou assisté par réseau radio au moyen d'un appareil de commande (4) du véhicule, d'un système de navigation du véhicule et/ou au moyen d'un smartphone du conducteur.

11. Procédé selon l'une quelconque des revendications précédentes, **caractérisé en ce que** le paramètre de fonctionnement comprend la vitesse du véhicule, une vitesse de rotation de roue, une demande de couple par le conducteur du véhicule, un courant de charge ou de décharge de l'accumulateur d'énergie électrique (2), une température extérieure, un angle de direction et/ou une accélération transversale du véhicule.

12. Système d'assistance (1) comprenant au moins un appareil de commande (4) pour exécuter un procédé selon l'une quelconque des revendications 1 à 11, **caractérisé en ce qu'**au moins un premier capteur (3) détecte une température d'un accumulateur d'énergie électrique (2) du véhicule et au moins un deuxième capteur (7) détecte une position et/ou un paramètre de fonctionnement du véhicule.

13. Utilisation d'un procédé selon l'une quelconque des revendications 1 à 11 dans un véhicule comprenant au moins une batterie au lithium-ion, une batterie au lithium-soufre et/ou une batterie au lithium-air.
